# EUROPEAN PATENT SPECIFICATION

(11) **EP 1 754 336 B1**
(45) Date of publication and mention of the grant of the patent: **12.03.2008**
(21) Application number: 04741757.1
(22) Date of filing: 08.06.2004
(51) Int. Cl.: H04L 12/14, H04M 17/00

(54) **FLEXIBLE CHARGING MECHANISMS FOR IP MULTIMEDIA SERVICES**
FLEXIBLE GEBÜHRENBERECHNUNGSMECHANISMEN FÜR IP-MULTIMEDIA-DIENSTE
MECANISMES DE CHARGEMENT FLEXIBLES POUR SERVICES MULTIMEDIA IP

(43) Date of publication of application: 21.02.2007
(73) Proprietor: TELEFONAKTIEBOLAGET LM ERICSSON (publ), 164 83 Stockholm (SE)
(72) Inventor: BELLORA, Mauro, I-21013 Gallarate (IT); DOTTI, Chiara, I-20144 Milan (IT); MATTILA, Leena, Marjatta, FIN-20780 Kaarina (FI); NILSSON, Rolf, S- Ronneby (SE)
(74) Representative: Lind, Robert
(86) International application number: PCT/EP2004/051063
(87) International publication number: WO 2005/122469

(56) References cited:
- US-A1- 2004 019 539
- 3RD GENERATION PARTNERSHIP PROJECT (3GPP): "Charging data description for the IP Multimedia Subsystem (IMS)" TECHNICAL SPECIFICATION 3GPP TS 32.225 V5.5.0, [Online] March 2004 (2004-03), pages 1-71, XP002317500 Retrieved from the Internet: URL:http://www.3gpp.org/ftp/Specs/archive/ 32_series/32.225/32225-550.zip> [retrieved on 2005-02-04]
- 3RD GENERATION PARTNERSHIP PROJECT (3GPP): "Push-to-Talk over Cellular (PoC) charging" TECHNICAL SPECIFICATION 3GPP TS 32.272 V0.0.2, [Online] March 2004 (2004-03), pages 1-19, XP002317501 Retrieved from the Internet: URL:http://www.3gpp.org/ftp/Specs/archive/ 32_series/32.272/32272-002.zip> [retrieved on 2005-02-14]

## Description

### Field of the Invention

The present invention relates to flexible charging mechanisms for IP multimedia services and which are applicable in particular, though not necessarily, to Push-to-talk over Cellular services.

### Background to the Invention

IP Multimedia (IPMM) services provide a dynamic combination of voice, video, messaging, data, etc. within the same session. By growing the numbers of basic applications and the media which it is possible to combine, the number of services offered to the end users will grow, and the inter-personal communication experience will be enriched. This will lead to a new generation of personalised, rich multimedia communication services.

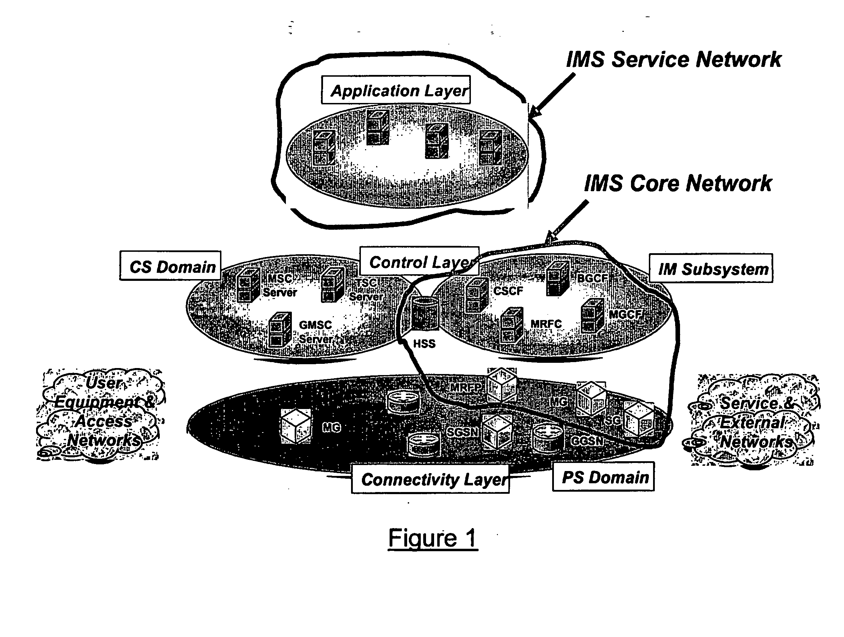

IP Multimedia Subsystem (IMS) is the technology defined by the Third Generation Partnership Project (3GPP) to provide IP Multimedia services over 3G mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) and Session Description Protocol (SDP) to set up and control calls or sessions between user terminals and/or servers. IMS sits on top of an access network which would typically be a General Packet Radio Service (GPRS) network but which might use some alternative technology, e.g. WLAN, Fixed access. Figure 1 illustrates schematically how the IMS fits into the mobile network architecture in the case of a GPRS access network.

Existing cellular telephone network operators have recently experienced tremendous growth in the numbers of subscribers choosing to use so-called "prepaid" subscriptions, i.e. where subscribers deposit an amount of cash (the credit balance) with their operators which is consumed by the subsequent use of services by the subscribers. It is anticipated that the prepaid subscription option will prove equally popular with the users of IMS services. Indeed, the provision of pre-paid services is likely to be a must for widespread take-up of IMS services. The prepaid payment method has the following main characteristics:
- Operator's credit control
- End-user/subscriber real-time spending control

An Online/Real-time charging mechanism has been defined by 3GPP and is the preferred way to handle prepaid subscribers. The mechanism has the following characteristics:
- It is built on bi-directional real-time communication between the serving elements (that is the nodes in control of a particular service) and the charging system
- Charging is an integral part of service delivery
- Credit authorisation can be performed before service delivery. This involves rating (a process of computing a price based on charging input which considers information (volume, duration, category, etc.), configuration data (tariff tables etc.) and a context that is obtained from other sources (time of day, location of the user etc.)), account check, and credit reservation.
- Credit is deducted from a user's account either concurrently with service delivery (one-time event charging), or during/at the end of service delivery (session-based charging)
- Operator's credit control
- End-users have real-time spending control.

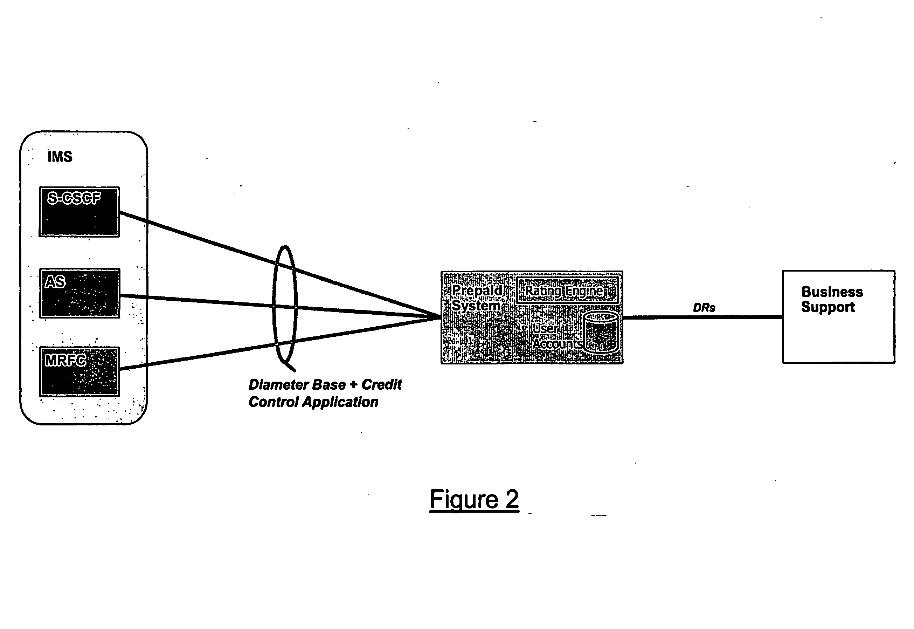

Figure 2 provides a simplified logical online charging architecture for IMS. The Online Charging System (OCS), in this example a Prepaid System (PPS) handling prepaid subscribers, provides a charging control function for the real-time charging mechanism. The Prepaid System includes the Account Balance Manager and the User Accounts, the Rating Engine and the Tariff Information. The Rating Engine provides rating values for sessions/services or events not priced at source, i.e. for which serving elements do not have a price. For online charging, the IMS Serving Elements (IMS SE), which may provide charging input to the OCS, are S-CSCF, MRFC, and AS. The interface between IMS SEs and PPS is based on Diameter Base Protocol (DBP) + Diameter Credit Control Application (DCC) as currently being defined by 3GPP in Release 5 and 6.

In the Session-based Credit Control scenario considered by 3GPP, an OCS receives a request for credit reservation from an IMS SE, rates the request, reserves a suitable amount of money from the user's account and returns the corresponding amount of credit resources to the IMS SE. Note that credit resource may not imply actual monetary credit; credit resources may be granted in the form of units (e.g. data volume, or time) to be metered. Upon reception of a successful credit authorisation answer with a certain amount of credit resources, the IMS SE allows service delivery to the end user and starts monitoring the usage of the granted resources. When the credit resources granted to the end user have been consumed, or the service has been successfully delivered or terminated, the IMS SE reports back to the OCS the used amount. The OCS deducts the used amount from the user's account; the OCS may perform rating and make a new credit reservation if the service delivery is continuing. This process is accomplished with the Session-based Credit Control scenario that includes first interrogation, possible intermediate interrogations, and the final interrogation. Both IMS SEs and the OCS are required to maintain credit control session state. Although 3GPP considers other charging scenarios, the Session-based Credit Control scenario is considered appropriate for most IMS services.

There are a number of IMS Charging Principles which need to be considered when applying the 3GPP OCS charging mechanism to IMS based services. Chief amongst these are:
- In an IMS session there can be a number of a users that are subscribers of several different IMS operators.
- Each of the IMS operators needs to be able to charge IMS users independently, according to their charging policy. Furthermore, different charging models may be applied in different networks for the same IMS session.
- Different charging models may be applied to different sets of subscribers for the same IMS service/feature, within a given operator's network.

In today's cellular networks prepaid payment is typically used for services such as Circuit-Switched (CS) voice, GPRS data, Short Message Service (SMS), Multimedia Messaging Service (MMS). Whether subscription-based charging (e.g. a service package for a flat monthly fee) or per-usage charging applies, service-usage is measured using one single mechanism for each service, as follows:
- Duration in seconds for CS voice
- Volume in Kbytes for GPRS data
- Per-message (per-event) for SMS and MMS
   In the above cases, the relevant SEs (MSC, GSN, MMSC) always know what parameter to monitor for each service. In contrast, an IMS service may be charged based on a number of possible service-specific chargeable events. For example, a user of an (IMS-based) Push-to- Talk over Cellular (PoC) service (a walkie-talkie type service) may be charged based on the number of sent and/or received talk bursts, or the duration in seconds of the sent and/or received talk bursts, or the session time, etc. In addition, a user may be charged differently based on whether he/she originates or terminates the session, whether he/she is the "session-owner" or a session-participant. Moreover, different charging models may apply to different categories of user (e.g. based on the type of subscription) for the same service/feature, within an operator's network (e.g. based on type of subscription).
- The 3GPP IMS Online Charging Application as it is currently defined means that:

- The same charging model must therefore apply to all prepay subscribers in a given operators network.
- All IMS SEs must be configured with one service-specific measurement method (even though they may support multiple measurement methods).
- If an operator would like to change/experiment with a new charging model based on a new measurement mechanism (e.g. "session time" instead of "talk burst length"), then all concerned IMS SEs (e.g. S-CSCF, MRF, S-CSCF) that provides charging inputs for the specific service must be reconfigured in order to apply the new measurement mechanism.

Such prior art systems and methods are, for example, known from US 2004/019539 by Raman et al, 29 January 2004 and from 3GPP TS 32.225 V5.5.0, "Charging data description for the IP Multimedia Subsystem (IMS)", March 2004.

It would be desirable for an operator to be able to manage charging models for IMS services and subscribers in a flexible manner and from a centralised element, e.g. the OCS.

### Summary of the Invention

According to a first aspect of the present invention there is provided a method of processing service related accounting requests at an Online Charging System of an IP Multimedia Subsystem, the method comprising:
receiving a service related accounting request from an IP Multimedia Subsystem Serving Element, the request containing an identification of the chargeable events measuring methods supported by the Serving Element,
selecting a charging model appropriate to the chosen service;
selecting one or more of the supported measuring methods on the basis of the selected charging model;
determining an amount of granted service units for the or each selected measuring method; and
sending to the Serving Element an accounting response containing the amount(s) of granted service units and an identification of the corresponding measuring method(s).

Embodiments of the invention provide the following advantages over the state of the art:
- Multiple charging models can be applied to (prepay) subscribers for the same service/feature in one operator's network.
- If the operator would like to change/experiment with a new charging model based on a new measurement method (e.g. "session time", instead of "talk burst length"), e.g. for some subscriber categories only, this requires action in only a centralised element, e.g. the OCS / PPS and not in the IMS SEs.

Preferably, the method of the first aspect comprises checking the account of the subscriber associated with the request prior to sending to the Serving Element said accounting response. Said steps of selecting one or more of the supported measuring methods and determining an amount of granted service units may, be based upon the account balance and/or the subscription type of the subscriber.

According to a second aspect of the present invention there is provided a method of controlling subscriber charging at an IP Multimedia Subsystem Serving Element of an IP Multimedia Subsystem, the method comprising:
upon receipt of a service request from a subscriber, sending a service related accounting request to an Online Charging System, the request containing an identification of the chargeable events measuring methods supported by the Serving Element; and
subsequently receiving from the Online Charging System an accounting response containing an amount(s) of granted service units and an identification of the corresponding measuring method(s) selected from the measuring methods supported by the Serving Element; and
for the duration of said service, applying said measuring method(s) and monitoring the received granted service unit amount(s), whilst the service is being delivered.

The chargeable events measuring methods supported by the Serving Element include one or more of: IMS service session time, service sent and/or received talk bursts, sent and/or received data volume. Table 1 below provides further details.

The invention is applicable in particular to Push-to-talk Over Cellular (PoC) services. In this scenario, the IP Multimedia Subsystem Serving Element is a PoC server. A charging model may be provided for each PoC user and/or feature.

Preferably, said accounting request and response are Diameter-Accounting-Request (ACR) and Diameter-Accounting-Answer (ACA) messages respectively.

### Brief Description of the Drawings

Figure 1 illustrates schematically a mobile network architecture incorporating an IP Multimedia Subsystem;
Figure 2 illustrates a simplified logical online charging architecture for an IMS services;
Figure 3 shows the PoC Release 2 architecture; and

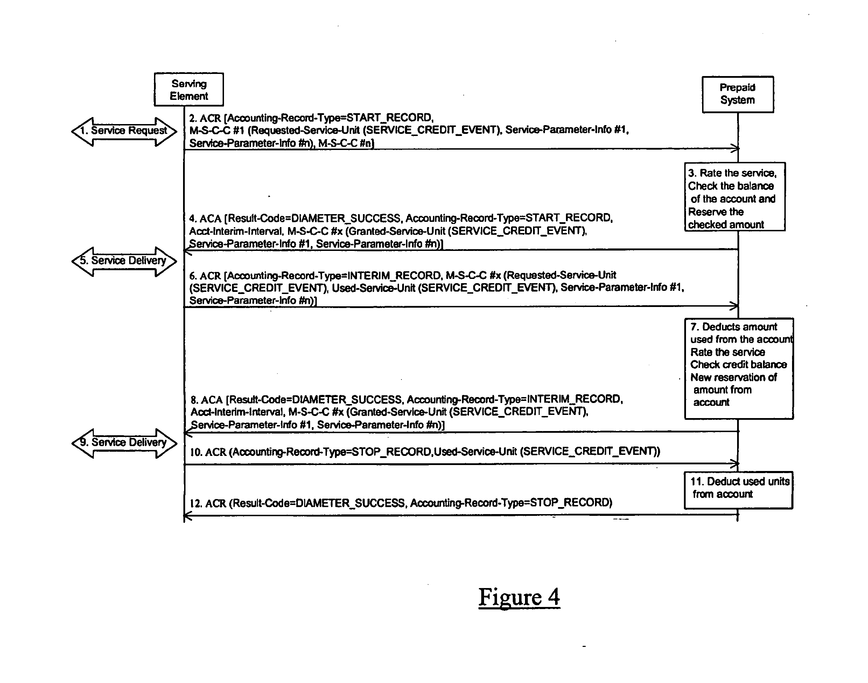

Figure 4 shows a signalling flow example of credit authorization between the IPMM SE and the Online Charging System / Prepaid System.

### Detailed Description of Certain Embodiments of the Invention

Push-to-talk over Cellular is a walkie-talkie type of service defined by an industry consortium. For further details see Push-to-Talk over Cellular (PoC) Release Phase 1. Four types of PoC talk session have been defined, namely *Instant Personal Talk, Ad-hoc Instant Group Talk, Instant Group Talk,* and *Chat Group Talk.* Table 1 shows examples of PoC talk session charging model that may be supported via the OCS mechanism.

For Instant Personal Talk and Ad-hoc Instant Group Talk the following charges may apply:
- The PoC session-owner may be charged for usage of centralised functions (e.g. ad-hoc group explosion and media distribution) based on the charging model of session-owner's home PoC operator. For Instant Personal Talk and Ad-hoc Instant Group Talk the session-owner is the PoC session originator.
- Each participant in the PoC session may be charged for his participation based on the charging model of the participant's home PoC operator.
   For Instant Group Talk and Chat Group Talk the following charges may apply:

- The PoC session-owner may be charged for usage of centralised functions (e.g. group list explosion and media distribution) based on the charging model of the session/group/chat-owners home PoC operator. For Instant Group Talk and Chat Group Talk the PoC session-owner is the PoC group owner.
- Each participant in the PoC session may be charged for his participation based on the charging model of the participant's home PoC operator.

The different charging basis for these different services, as well as the differing charging models of different users, necessitates a flexible mechanism for defining in real-time what credits must be issued and what session data must be collected in order to control service use by prepaid subscribers. It is proposed here to introduce a process for the communication of service-specific supported measurement methods (in addition to service-specific rating input) from IMS SEs to the OCS, at the time that a IMS SE requests credit authorisation, such that, based on received inputs and the charging model in force, the OCS is able to select the types and amount of granted credit resources to be returned to the IMS SE.

This approach is be further illustrated by the following example:
When an IMS service is invoked, the responsible IMS SE, i.e. PoC server, shall send to OCS a Diameter Accounting-Request (ACR) message including:
- Service-specific rating input, such as IMS service/feature type (e.g. PoC Instant Personal Talk), call/session party role (e.g. session-participant)
- A list of service-specific chargeable events that the IMS SE is able to measure, i.e. the IMS SE's supported measuring methods for the service requested (e.g. PoC session time, PoC send/received talk bursts, etc.)
- An amount of requested-service-unit for each associated service-specific event the IMS SE is able to measure (decentralised unit determination)
   The OCS shall rate the IMS service request (centralised rating), check the user's balance, and, based on the charging model in force (centralised management of charging model), reserve a suitable amount and type of credit units. The OCS shall send to IMS SE a Diameter Accounting-Answer (ACA) message including:

- The granted-service-unit and the service-specific chargeable event the IMS SE shall measure (e.g. number of PoC sent talk burst).

Upon IMS service invocation, the concerned IMS SE performs credit authorisation with money reservation towards PPS (session-based charging scenario). The IMS SE provides the following service-specific information to PPS in a Diameter Accounting-Request (ACR) command:
- Service-type
   (e.g. PoC Instant Personal Talk, Ad-hoc Instant Group Talk, Instant Group Talk, Chat Group Talk, or Instant Personal Alert, etc.)
- Party-role
   (e.g. session-participant, session-owner, session-originating, or session terminating)
- List of service-specific events the IMS SE is able to measure.
   (e.g. for PoC talk session & party-role session-participant: participant session time, number of sent and/or received talk bursts, and time-length of sent and/or received talk bursts)
   (e.g. for PoC talk session & party-role session-owner: total time session is up, sum of time spent by each participant, time-length of distributed talk bursts, number of distributed talk bursts, and number of participants)
   (e.g. for PoC Instant Personal Alert: number of alert messages)
- List of Requested-Service-Unit associated to the list of service-specific events the IMS SE is able to measure
   (e.g. for PoC Instant Personal Talk: X units for participant session time, Y units for number of sent and/or received talk bursts, AND etc.)

The PPS rates the IMS service request (centralised rating), checks the user's balance, and, based on the charging model in force (centralised management of charging model), reserves a suitable amount and type of credit units. The PPS provides the following service-specific information to the IMS SE in a Diameter Accounting-Answer (ACA) command:
- Service-type (e.g. PoC Instant Personal Talk). Derived from the ACR command.
- Party-role (e.g. session-participant). Derived from the ACR command.
- (one or more) Service-specific event the IMS SE shall measure. Determined by PPS based on the charging model in force, and the list of service-specific events the IMS SE is able to measure as indicated in the ACR command. This information identifies the meaning of the granted-service-units (e.g. number of sent talk bursts)
- (one or more) Granted-Service-Unit for the event to be measured (e.g. Y units, that is Y sent talks burst)
   NOTE: more than one set of "service-specific event to be measured" and "granted service-unit may be sent to IMS SE if, for a given service, the user shall incur multiples charges, e.g. both session-time and sent-talk-burst.

To provide service-specific rating input and to notify support for several measuring methods for the same service from IMS SE to PPS, as well as to provide the charging model in force from PPS to IMS SE, it is proposed to include in the Diameter ACR/ACA commands the Multiple-Services-Credit-Control AVP (M-S-C-C) (see IETF DCC).

The Multiple-Services-Credit-Control AVP may also be used when multiple IMS services are invoked in the same IMS session.

### Example of Session-Based Charging scenario

The SE initiates an accounting session towards the PPS prior to service execution. The PPS determines the price of the service and reserves the corresponding monetary amount from the user's account. The PPS authorises the service execution by granting service units (e.g. time, data volume) to the IMS SE that may initiate service execution. The reservation from the user's account is valid for a certain duration after which the reservation expires; the interim interval is used to guarantee that the SE reports the used service units before the reservation in the user's account expires.

When all the granted service units are spent by the service, when there is a change in the rating conditions (e.g. change in media components), or when the interim interval expires, the SE reports the used service units and requests a new credit reservation from the PPS. The PPS refunds the reserved credit amount and deducts the used monetary amount from the end users account. The PPS authorises the continued service execution by granting service units (e.g. time, data volume) to the SE. Note that if the service execution time is so short that neither the interim interval nor the granted units expires, additional interim reports are not needed.

When the subscriber terminates the service delivery, the SE reports back the last used service units. The PPS refunds the reserved credit amount and deducts the used monetary amount from the user's account.

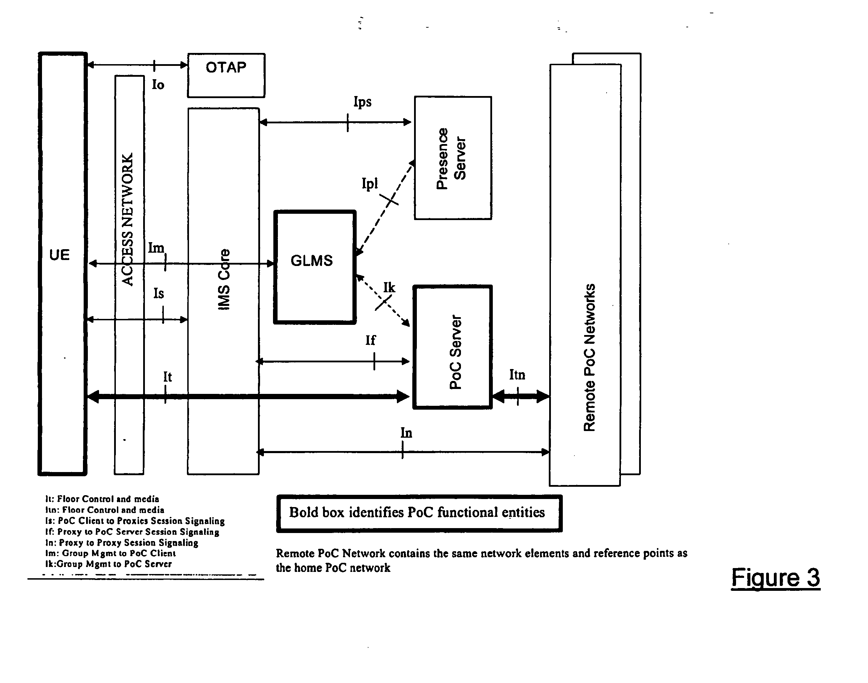

Figure 3 illustrates signalling between the IMS SE and the PPS, associated with a successful charging session for services without a specific price,. The parameters in the ACR/ACA messages refer to a "PoC Instant Personal Talk" service feature and a user with the role of "session-owner". The sequence of signalling steps shown is as follows:
1. Before the service can be provided to the end user, the IMS SE needs to know if the subscriber has enough credit in his/her account. In this case the SE requests to have the service rated
2. An ACR is sent to the PPS. The ACR includes:
   - Accounting-Record-Type=START_RECORD
   - Subscription-Id (Type=END USER SIP URL, Data='user-A SIP URI')
   - M-S-C-C (#1)
      Service-Parameter-Info (Type=ExtensionNumber1,
      Value=POC_INSTANT _PERSONAL_TALK)
      Service-Parameter-Info (Type=ExtensionNumber2, Value= session-owner)
      Requested-Service-Unit (Type=SERVICE_CREDIT_ EVENT, Value='preconfigured value')
      Service-Parameter-Info (Type=ExtensionNumberA, Value= e.g. "total time session is up")
   - M-S-C-C (#n)
      Service-Parameter-Info (Type=ExtensionNumber1,
      Value=POC_INST ANT _PERSONAL_TALK)
      Service-Parameter Info (Type=ExtensionNumber2, Value= session-owner)
      Requested-Service-Unit (Type=SERVICE_CREDIT_EVENT, Value='preconfigured value')
      Service-Parameter-Info (Type=ExtensionNumberB, Value= e.g. "sum of time spent by each participant")
   NOTE: in this example two M-S-C-C AVPs are shown. In general, several M-S-C-C AVPs may be included, one for each measurement method supported by the IMS SE for the concerned service-type and party-role combination.
3. The PPS rates the service, based on the contents of the received Service-Parameter-Info, makes a credit-reservation from the end-user's account (that covers the cost of the service). For the purpose of this scenario the user's credit balance is assumed to be sufficient.
4. A successful result is returned from the PPS in an ACA, the ACA including the granted amount of events and the granted reservation lifetime (in the Accounting-Interim-Interval AVP). The ACA includes:
   - Result-Code=DIAMETER_SUCCESS
   - Accounting-Record-Type=START_RECORD
   - Accounting-Interim-Interval (value set by the Prepaid System')
   - Subscription-Id (Type=END_USER_SIP _URL, Data='user-A SIP URI')
   - M-S-C-C
   - Service-Parameter-Info (Type=ExtensionNumber1,
   - Value=POC_INST ANT _PERSONAL_TALK)
   - Service-Parameter-Info (Type=ExtensionNumber2, Value= session-owner)
   - Granted-Service-Unit (Type=SERVICE_CREDIT_EVENT, Value= 'Prepaid System sets Granted-Service-Unit value = Requested-Service-Unit value')
   - Service-Parameter-Info (Type=ExtensionNumberA, Value= e.g. "total time session is up")
   -
   - The SE starts monitoring the usage of the granted-service-units.
5. Service delivery starts and the reserved units are concurrently controlled
6. During the service delivery, when the granted units have been consumed by the service, when there is a change in the rating conditions (e.g. media component changes) or the Acct-Interim-Interval expires, the SE sends an ACR to report the Used-Service-Unit to PPS. The ACR includes:
   - Accounting-Record- Type=INTERIM _RECORD
   - Subscription-Id (Type=END_USER_SIP _URL, Data='user-A SIP URI')
   - M-S-C-C
   - Service-Parameter-Info (Type=ExtensionNumber1,
   - Value=POC_INST ANT _PERSONAL_TALK)
   - Service-Parameter-Info (Type=ExtensionNumber2, Value= session-owner)
   - Requested-Service-Unit (Type=SERVICE_CREDIT_EVENT, Value='preconfigured value')
   - Used-Service-Unit (Type=SERVICE_CREDIT_EVENT, Value='amount of used service units')
   - Service-Parameter-Info (Type=ExtensionNumberA, Value= e.g. "total time session is up")
7. The PPS deducts the amount used from the account. PPS rates the service, based on the contents of the Service-Parameter-Info AVP, checks the subscribers account balance and performs a new reservation of the checked amount from the account
8. A successful result is returned from PPS in an ACA, the ACA including the granted amount of events and the granted reservation lifetime (in the Accounting-Interim-Interval AVP). The ACA includes:
   - Result-Code=DIAMETER_SUCCESS
   - Accounting-Record-Type=INTERIM _RECORD
   - Accounting-Interim-Interval ('value set by the Prepaid System')
   - Subscription-Id (Type=END_USER_SIP _URL, Data='user-A SIP URI')
   - M-S-C-C
      Service-Parameter-Info (Type=ExtensionNumber1,
      Value=POC_INSTANT _PERSONAL_TALK)
      Service-Parameter-Info (Type=ExtensionNumber2, Value= session-owner)
      Granted-Service-Unit (Type=SERVICE_CREDIT_EVENT, Value='Prepaid System sets Granted-Service-Unit value = Requested-Service-Unit value')
      Service-Parameter-Info (Type=ExtensionNumberA, Value= e.g. "total time session is up")

   The SE continues monitoring the usage of the granted-service-units.
9. Service delivery continues and the reserved units are concurrently controlled. Steps from 6 to 9 can be repeated several times
10. When service delivery is completed (or the granted units have been consumed), the SE sends an ACR to terminate the accounting session and report the used units. The ACR includes:
   - Accounting-Record-Type=STOP_RECORD
   - Subscription-Id (Type=END_USER_SIP_URL, Data='user-A SIP URI')
   - Used-Service-Unit (Type=SERVICE_CREDIT_EVENT, Data='amount of used service units')
11. The PPS deducts the used units
12. The PPS sends back an ACA indicating successful operation

It will be appreciated by the person of skill in the art that various modifications may be made to the above described embodiments without departing from the scope of the present invention.

**Table 1**

| **PoC charging model** | **PoC participant charging** | **PoC session-owner charging** |
|---|---|---|
| Session time: charge for session time, i.e. charge for Instant Talk session duration | PoC session time: time spent by the PoC participant in a PoC session | Total PoC session time: total time PoC session is up, i.e. the time there is at least one PoC participant in a PoC session |
| (NOTE 1, 2) | | |
| | | OR |
| | | Amount of PoC participants as function of time: sum of time spent by the each PoC participant in a PoC session, measured from joining to leaving the session |
| Granted talking time (floor-granted till floor-released) | Sent talk-bursts AND/OR Received talk-bursts: amount of talk burst sent AND/OR received by the PoC participant, measured as time-length of talk-bursts | Talk-bursts distributed to PoC participants: amount of distributed talk bursts, measured as time-length of talk-bursts |
| (NOTE 1,2) | | |
| Number of talk-bursts | Sent talk-bursts AND/OR Received talk-bursts: amount of talk burst sent AND/OR received by the PoC participant, measured as number of talk-bursts | Talk-bursts distributed to PoC participants: amount of distributed talk bursts, measured as number of talk-bursts |
| (NOTE 1, 2) | | |
| NOTE 1: In Instant Personal Talk both parties may be charged for their participation in a 1-to-1 session according to the charging models of their home operators; also, the PoC session originator and the other PoC participant may be charged differently. | | |
| NOTE 2: For Ad-hoc Instant Group Talk, Instant Group Talk, and Chat Group Talk, the number of participants may be used as rating input; e.g. rating associated to the charging model "total PoC session time" for the session-owner may vary based on the current/max number of participants to the group talk. | | |

## Claims

1. A method of processing service related accounting requests at an Online Charging System of an IP Multimedia Subsystem, the method comprising:
receiving a service related accounting request from an IP Multimedia Subsystem Serving Element, the request containing an identification of the chargeable events measuring methods supported by the Serving Element,
selecting a charging model appropriate to the chosen service;
selecting one or more of the supported measuring methods on the basis of the selected charging model;
determining an amount of granted service units for the or each selected measuring method; and
sending to the Serving Element an accounting response containing the amount(s) of granted service units and an identification of the corresponding measuring method(s).

2. A method according to claim 1 and comprising checking the account of the subscriber associated with the request prior to sending to the Serving Element said accounting response.

3. A method according to claim 2, wherein said steps of selecting one or more of the supported measuring methods and determining an amount of granted service units are based upon the account balance and/or the subscription type of the subscriber.

4. A method of controlling subscriber charging at an IP Multimedia Subsystem Serving Element of an IP Multimedia Subsystem, the method comprising:
upon receipt of a service request from a subscriber, sending a service related accounting request to an Online Charging System, the request containing an identification of the chargeable events measuring methods supported by the Serving Element; and
subsequently receiving from the Online Charging System an accounting response containing an amount(s) of granted service units and an identification of the corresponding measuring method(s) selected from the measuring methods supported by the Serving Element; and
for the duration of said service, applying said measuring method(s) and monitoring the received granted service unit amount(s) whilst the service is being delivered.

5. A method according to any one of the preceding claims, wherein the billing measuring methods supported by the Serving Element include one or more of: IMS service session time, service sent and/or received number of talk bursts, sent and/or received amount of talk bursts measured as time length.

6. A method according to any one of the preceding claims, wherein said service is a Push-to-talk Over Cellular service, and the IP Multimedia Subsystem Serving Element is a Push-to-talk Over Cellular server.

7. A method according to any one of the preceding claims, wherein said accounting request and response are Diameter-Accounting-Request (ACR) and Diameter-Accounting-Answer (ACA) messages respectively.

## Patentansprüche

1. Verfahren zur Verarbeitung von dienstbezogenen buchhalterischen Anforderungen in einem Online Gebührenberechnungssystem eines IP Multimedia Subsystems, welches Verfahren umfasst:
Empfangen einer dienstbezogenen buchhalterischen Anforderung von einem IP Multimedia Subsystem Serving Element, welche Anforderung eine Kennung der Messverfahren der gebührenpflichtigen Ereignisse enthält, die von dem Serving Element unterstützt werden,
Auswählen eines dem ausgewählten Dienst entsprechenden Gebührenberechnungsmodells;
Auswählen eines oder mehrerer der unterstützten Messverfahren auf der Basis des ausgewählten Gebührenberechnungsmodells;
Bestimmen einer Menge gewährter Diensteinheiten für das oder jedes ausgewählte Messverfahren; und
Senden einer buchhalterischen Anforderung an das Serving Element, die die Menge(n) der gewährten Diensteinheiten und eine Kennung des/der entsprechenden Messverfahren enthält.

2. Verfahren nach Anspruch 1, umfassend Prüfen des Kontos des mit der Anforderung verbundenen Teilnehmers, bevor die buchhalterische Antwort an das Serving Element gesendet wird.

3. Verfahren nach Anspruch 2, wobei die Schritte des Auswählens eines oder mehrerer der unterstützten Messverfahren und des Bestimmens einer Menge gewährter Diensteinheiten auf dem Kontosaldo und/oder dem Teilnehmertyp des Teilnehmers basieren.

4. Verfahren zum Steuern der Teilnehmergebührenberechnung an einem IP Multimedia Subsystem Serving Element eines IP Multimedia Subsystems, welches Verfahren umfasst:
Senden, nach Empfang einer Dienstanforderung von einem Teilnehmer, einer dienstbezogenen buchhalterischen Anforderung an ein Online Gebührenberechnungssystem, welche Anforderung eine Kennung der Messverfahren der gebührenpflichtigen Ereignisse enthält, die von dem Serving Element unterstützt werden; und
Anschließendes Empfangen einer buchhalterischen Antwort von dem Online Gebührenberechnungssystem, die die Menge(n) der gewährten Diensteinheiten sowie eine Kennung des/der entsprechenden Messverfahren enthält, die unter den Messverfahren ausgewählt sind, die von dem Serving Element unterstützt werden; und
Anwenden des/der Messverfahren für die Dauer des besagten Dienstes und Überwachen der empfangenen gewährten Diensteinheitmenge(n) während des Ausführens des Dienstes.

5. Verfahren nach einem der vorhergehenden Ansprüche, wobei die Fakturierungsmessverfahren, die von dem Serving Element unterstützt werden, eins oder mehr der folgenden beinhalten: die Sitzungsdauer des IMS Dienstes, die Anzahl der vom Dienst gesendeten und/oder empfangenen Sprech-Bursts, die Menge der als Zeitlänge gemessenen gesendeten und/oder empfangenen Sprech-Bursts.

6. Verfahren nach einem der vorhergehenden Ansprüche, wobei der Dienst ein "Push-to-Talk Over Cellular" Dienst ist, und das IP Multimedia Subsystem Serving Element ein "Push-to-Talk Over Cellular" Server ist.

7. Verfahren nach einem der vorhergehenden Ansprüche, wobei die buchhalterischen Anforderungen und Antworten ACR Nachrichten (ACR = Diameter-Accounting-Request) bzw. ACA Nachrichten (Diameter-Accounting-Answer) sind.

## Revendications

1. Procédé en vue de traiter des demandes de comptabilité associées à un service au niveau d'un système de facturation en ligne d'un sous-système multimédia IP, le procédé comportant les étapes consistant à :
recevoir une demande de comptabilité associée à un service d'un élément de desserte de sous-système multimédia, la demande comportant une identification des procédés de mesure des événements facturables pris en charge par l'élément de desserte,
sélectionner un modèle de facturation approprié au service sélectionné ;
sélectionner un ou plusieurs des procédés de mesure pris en charge sur la base du modèle de facturation sélectionné ;
déterminer une quantité d'unités de service accordées pour le ou chaque procédé de mesure sélectionné ; et
envoyer à l'élément de desserte une réponse de comptabilité contenant la ou les quantités d'unités de service accordées et une identification du ou des procédés de mesure correspondants.

2. Procédé selon la revendication 1 et comportant la vérification du compte de l'abonné associé à la demande avant d'envoyer ladite réponse de comptabilité à l'élément de desserte.

3. Procédé selon la revendication 2, dans lequel lesdites étapes consistant à sélectionner un ou plusieurs des procédés de mesure pris en charge et à déterminer une quantité d'unités de service accordées sont basées sur la position du compte et/ou le type d'abonnement de l'utilisateur.

4. Procédé en vue de commander une facturation d'abonné au niveau d'un élément de desserte de sous-système multimédia IP, le procédé comportant les étapes consistant à :
à la réception d'une demande de service émanant d'un abonné, envoyer une demande de comptabilité associée à un service à un système de facturation en ligne, la demande contenant une identification des procédés de mesure d'événements facturables pris en charge par l'élément de desserte ; et
recevoir subséquemment du système de facturation en ligne une réponse de comptabilité contenant une ou des quantités d'unités de service accordées et une identification du ou des procédés de mesure correspondants sélectionnés à partir des procédés de mesure pris en charge par l'élément de desserte ; et
pour la durée dudit service, appliquer ledit ou lesdits procédés de mesure et surveiller la ou les quantités d'unités de service accordées reçue(s) alors que le service est en train d'être délivré.

5. Procédé selon l'une quelconque des revendications précédentes, dans lequel les procédés de mesure de facturation pris en charge par l'élément de desserte incluent un ou plusieurs parmi : un temps de session de service IMS, un nombre envoyé et/ou reçu des rafales vocales par le service, une quantité envoyée et/ou reçue de rafales vocales mesurée en tant que longueur temporelle.

6. Procédé selon l'une quelconque des revendications précédentes, dans lequel ledit service est un service de messagerie vocale instantanée sur cellulaire, et l'élément de desserte de sous-système multimédia IP est un serveur de service de messagerie vocale instantanée sur cellulaire.

7. Procédé selon l'une quelconque des revendications précédentes, dans lequel ladite réponse et ladite demande de comptabilité sont des messages de demande de comptabilité par diamètre (ACR) et de réponse de comptabilité par diamètre (ACA), respectivement.
